# EUROPEAN PATENT SPECIFICATION

(11) **EP 1 397 924 B1**
(45) Date of publication and mention of the grant of the patent: **19.12.2007**
(21) Application number: 02730457.5
(22) Date of filing: 29.05.2002
(51) Int. Cl.: H04Q 7/22, H04M 1/725

(54) **IMPROVEMENTS IN MESSAGE DISPLAY**
VERBESSERUNGEN ZUR ANZEIGE VON NACHRICHTEN
AMELIORATIONS DANS L'AFFICHAGE DES MESSAGES

(30) Priority: 05.06.2001 GB 0113537
(43) Date of publication of application: 17.03.2004
(73) Proprietor: SUPERSCAPE GROUP PLC, Hook, Hampshire RG27 9XA (GB)
(72) Inventor: BEARDOW, Paul Rowland, Egham, Surrey TW20 9BE (GB)
(74) Representative: Ahmad, Sheikh Shakeel
(86) International application number: PCT/GB2002/002490
(87) International publication number: WO 2002/100121

(56) References cited:
- GB-A- 2 348 082
- US-A- 5 784 001
- US-A- 6 044 248

## Description

The present invention relates to messaging. The invention particularly relates to alphanumeric messaging in a communications environment. Most particularly, the present invention relates to "text messaging" in a cellular or other radio telephone system.

Cellular radio telephones, designed primarily for duplex (two way) voice communication, are also adapted for simplex (one way) text messaging. A user types a message (using multi-stroke keying on the limited button set of the mobile telephone keypad) which is displayed on the user's screen. When the user is content with the content of the text message, the message is sent to the recipient or recipients of the user's choice. This is a simplex (one way) process. The text message is sent, and simply arrives. On arrival, the recipient's mobile telephone can ring (or not, as selected). In any event, the recipient is informed by sound (for example, the morse characters ... -- ...), or display of an icon, or otherwise, that a "short message service" (SMS) message awaits his or her attention. When the recipient views a text message, alphanumeric and other script characters are displayed. Text messages are generally limited to having fewer than a predetermined number of characters (generally around one hundred), and so great ingenuity is required to construct a text message carrying more than a trivial amount of meaning.

As well as the use of abbreviations and spelling contraction to rival those used in morse code traffic, text messagers (a neologism for a sender or receiver of text messages) have, at their disposal, a number of icons to express abstract ideas. These icons are script characters, generally derived from the second part of the ASCII character set, and so take up no more space that the alphanumeric characters found in the first part of the ASCII character set. Such icons can include 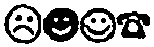 . Those that express feeling are sometimes called EMOTICONS (emotional icons). Despite these extra symbols, the content of a text message is low and a little short on attention-getting or entertainment value.

A previous attempt to enhance text message content is disclosed by GB-A-2,348,082, which concerns the transmission and reception of text messages including graphics using mobile telephones. However, this invention is only concerned with 2D images that are sent with the text.

The present invention seeks to provide enhanced content for text messaging while staying within the character count restraint.

According to a first aspect of the present invention, there is provided there is provided a method for enhancing the display of a data message on a screen of a receiving mobile communications device, the data message including a string of characters, the method including: receiving the data message from a sending mobile communications device capable of generating and sending the data message via a mobile telecommunications network; identifying one or more consecutive characters in the string of characters as a pointer to an associated enhanced display data item stored in a database comprising a plurality of enhanced display data items; retrieving the associated enhanced display data item from the database using the pointer; and displaying the associated enhanced display data item in response to executing the identifying and retrieving steps, wherein the retrieving and displaying steps retrieve and display an associated display data item which comprises a three-dimensional construct.

According to a second aspect of the present invention, there is provided an apparatus for enhancing the display of a data message on a screen of a receiving mobile communications device, the data message including a string of characters, the apparatus comprising: receiving means for receiving the data message from a sending mobile communications device capable of generating and sending the data message via a mobile telecommunications network; identifying means for identifying one or more consecutive characters in the string of characters as a pointer to an associated enhanced display data item stored in a database comprising a plurality of enhanced display data items; retrieving means for retrieving the associated enhanced display data item from the database using the pointer; and displaying means for displaying on the screen the associated enhanced display data item retrieved by the retrieving means, wherein the retrieving means retrieves an associated display data item which comprises a three-dimensional construct.

According to a third aspect of the present invention, there is provided a method for enhancing the display of a data message on a screen of a sending mobile communications device capable of generating and sending the data message via a mobile telecommunications network to a receiving mobile communications device, the data message including a string of characters, the method including: generating the data message using the sending mobile communications device; identifying one or more consecutive characters in the string of characters as a pointer to an associated enhanced display data item stored in a database comprising a plurality of enhanced display data items; retrieving the associated enhanced display data item from the database using the pointer; and displaying the associated enhanced display data item in response to executing the identifying and retrieving steps, wherein the retrieving and displaying steps retrieve and display an associated display data item which comprises a three-dimensional construct.

Preferably, the displaying step comprises displaying the associated enhanced display data item in place of the one or more consecutive characters identified during the identifying step.

It is also advantageous if the displaying step comprises displaying the associated enhanced display data item together with the one or more consecutive characters identified during the identifying step.

Furthermore, it is preferable if the string of characters comprises a single character.

Preferably, the associated enhanced display data item includes a picture and/or an animation.

It is also advantageous to cause the three-dimensional construct to be moved to create an animated display.

Preferably, the database comprises a plurality of enhanced display data item sets, and the method further comprises selecting which enhanced display data item set is displayed.

It is also preferable for the method to comprise obtaining enhanced display data items for the database from a remote source, where the remote source includes a server and/or a camera.

It is, of course, advantageous, if access to the remote source is achieved via the mobile telecommunications network configured to access the World Wide Web. Similarly, it is preferable if the method is implemented on a mobile telephone.

Preferably, the method further comprises storing an identifier for the sending mobile communications device in a database and attributing an associated enhanced display data item set with the stored identifier. In addition, the receiving step may further comprise: recognising the identifier of the sending mobile communications device; retrieving the associated enhanced display data item set; and utilising the associated enhanced display data item set in the displaying step.

The invention is further explained, by way of an example, by the following description, taken in conjunction with the appended drawings, in which:
Figure 1 is representative of the mobile telephone text messaging environment within which the embodiment of the invention is set.
Figure 2 shows some script characters currently used in text messaging.
Figure 3 shows the general components of a mobile telephone, in as much as they apply to the embodiment.
Figure 4 is a flow chart of the manner in which a modified text message can be handled.
Figure 5 is a flow chart showing how a modified text message can be displayed
Figure 6 is a flow chart of retrieval activities for display routines.
Figures 7A and 7B illustrate the environment and stages in which a display routine is retrieved from a data base.
Figure 8 is a flow chart showing how called identification can be used to trigger a preselected or later selected set of display routines.
Figure 9 shows how a set of display routines can be selected for a particular caller.
And
Figure 10A to 10G are examples of script substitutions which can be used with the present embodiment.

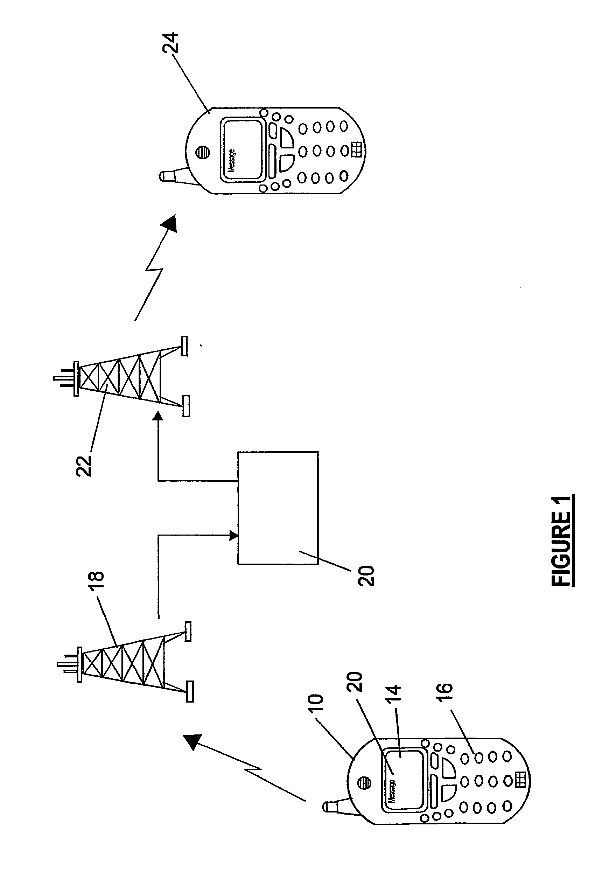

Figure 1 shows the environment within which the present invention is applied. An originating handset 10 assembles a text message 12 on its screen 14 by means of the keyboard 16. When the text message 12 is acceptable, the user of the originating handset 10 sends the text message to a receiving base station 18 (usually the nearest base station, and the one with which the originating handset is, at that moment, registered) which transfers the text message, through the switched telephone network 20, to the transmitting base station 22 with which a receiving handset 24 is registered. The receiving base station 22 transmits the text message 12 to the receiving handset 24 which receives and stores the text message 12 automatically, and then announces its act of reception for the recipient, then or later, to view the text message 12.

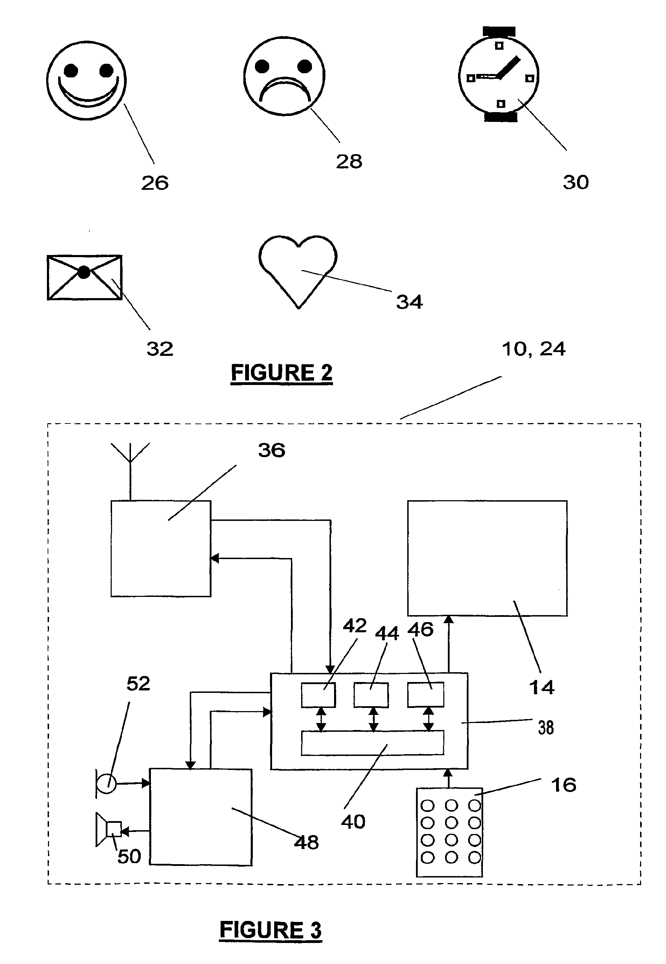

Figure 2 shows some of the icons used in text messaging. A smiling face 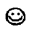 26 denotes happiness. A scowling face 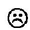 28 denotes unhappiness or anger. A watch 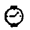 30 denotes time. An envelope 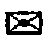 32 denotes a message. A heart 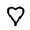 36 denotes love or affection. The list is endless. Some of the icons are simple extractions from the second ASCII symbol or character set. Others are substituted by the handsets 10 24 in response to particular keystrokes or data bytes. Other conventions have arisen, where a combination of punctuation characters such as ":-)" can be used, in this instance, to denote the smiley icon 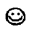 26. Almost non-iconic conventions have also arisen. For example CUL8R?:-) means "Can I see you later, and the idea makes me happy". The present invention seeks to provide added utility responsively to changing conventions, both in iconic and abreviative contexts.

Attention is drawn to Figure 3 showing a schematic diagram of the general parts in a handset 10, 24. No matter what the "generation" of mobile phone 10, 24, they all have the same parts shown in Figure 3.

A radio frequency section 36 provides all the radio reception and radio transmission functions of the handset 10, 24. A controller 38 sends signals for transmission to, receives signals from, and provides operating instructions to, the radio frequency section 36. From the point of view of the present invention, it does not matter what frequency, transmission standard or other protocols the radio frequency section 36 has. All that matters is that, under instruction from the controller 38, messages can be sent and received.

The controller receives user input from the keyboard 16 and sends images to be displayed on the screen 14. The controller 38 comprises a central processor 40, similar to that found in any personal computer. The central processor 40 operates in conjunction with Random Access Memory (RAM), Read-Only Memory (ROM) 44 and Electrically Alterable Read Only Memory (EAROM) 46. The RAM 42 is the instantly functional memory, and deals with instant memory requirements. The RAM 42 loses all of its content when power is removed. The ROM 44 contains the programs and parameters which are essential for the processor 38 to function, and which never change. The ROM 44 retains its contents forever, and the contents cannot be changed. The EAROM 46 contains information which is, usually, permanent, but which might be changed on very rare occasions. The EAROM 46 retains its contents when power is removed, but its contents can be changed when special signals are provided. The memories 42 44 46 are in part on the circuit board which houses the controller 38, and in part (especially some ROM and EAROM) on the SIM card which is placed into a handset 10 24 and which provides portability between handsets for a user's network connections, personal preferences, phonebook etc. In addition, audio circuits 48 drive a speaker 50 and receive signals from a microphone 52, and interact with the controller 38 to provide the conversational nature of the handset 10 24.

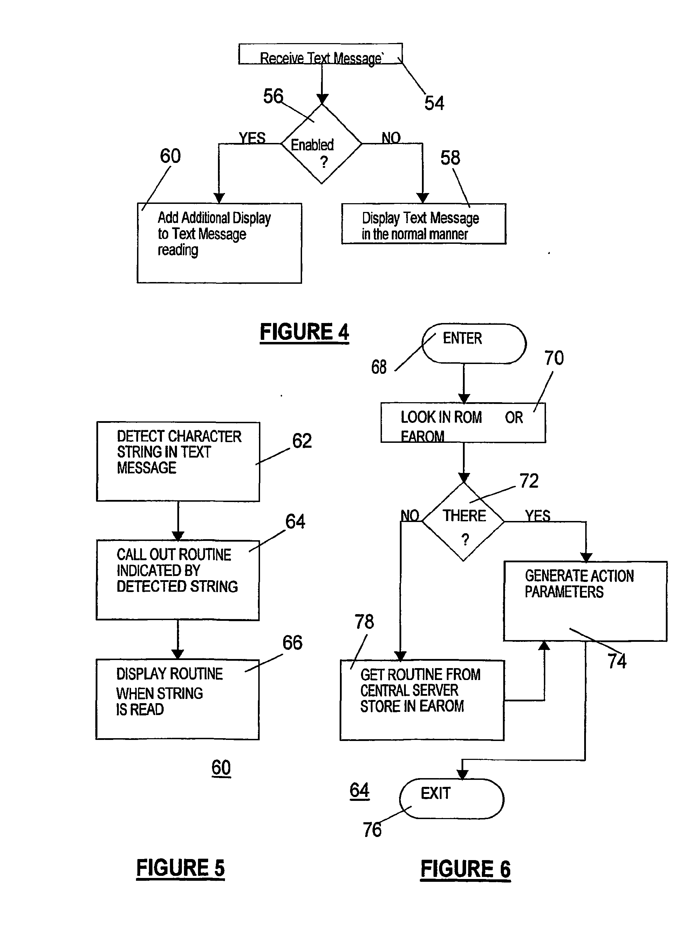

Attention is drawn to figure 4, a brief flowchart showing how the present invention is compatible with handsets 10 24 not adapted for the present invention. A first operation 54 has the handset 10 24 receive a text message. The text message consists only of normal characters, known in "ordinary" text messaging. A first test 56 checks to see if the handset 10 24 is enabled to provide the additional display, with which the present invention is concerned. It the user has not enabled the additional display feature, a second operation 58 has the handset 10 24 display the text message in the normal manner. If the user has enabled the additional display feature, a third operation 60 has the handset 10 24 add the additional display of the present invention. If, however, the handset 10 24 is not of a type, adapted to operate according to the present invention, the text message is simply displayed, in the normal manner.

Attention is drawn to figure 5 which expands upon the third operation 60 of figure 4. A fourth operation 62 has the handset 10 24 examine the text message it has just received. The user of the handset 10 24 has not yet examined (read) the text message. The fourth operation 62 looks for character strings which the handset 10 24 will use as triggers for additional display, over and above the normal content of the text message. Thereafter, a fifth operation 64 calls out the display routine which is indicated by each triggering character string. A sixth operation 66 then causes the provision of a respective additional display, indicated by each triggering character string, whenever the part of the text message containing the triggering character string is read.

Attention is drawn to Figure 6, expanding upon the fifth operation 64 of Figure 5. Entry 68 from the fourth operation 64 is to a seventh operation 70 where the handset 10 24 looks in its ROM 44 and/or its EAROM 46 to see if instructions exist to generate the additional display called out by a character string in the text message. Some routines will permanently be stored in the ROM 44. Other routines will have been acquired over time, and will have been stored in the EAROM 46. If a second test 72 detects that the appropriate routine is already stored, an eighth operation 74 generates the action parameters, from the stored routine, ready to be used in the sixth operation 66 to which exit 76 is made. If the second test 72 does not detect that the required routine is stored in the ROM 44 or EAROM 46, a ninth operation 78 gets the required routine from a central server, stores the acquired required routine in the EAROM 46 for further use at a later time, and passes control to the eighth operation 74 where the action parameters are generated for use in the sixth operation 66.

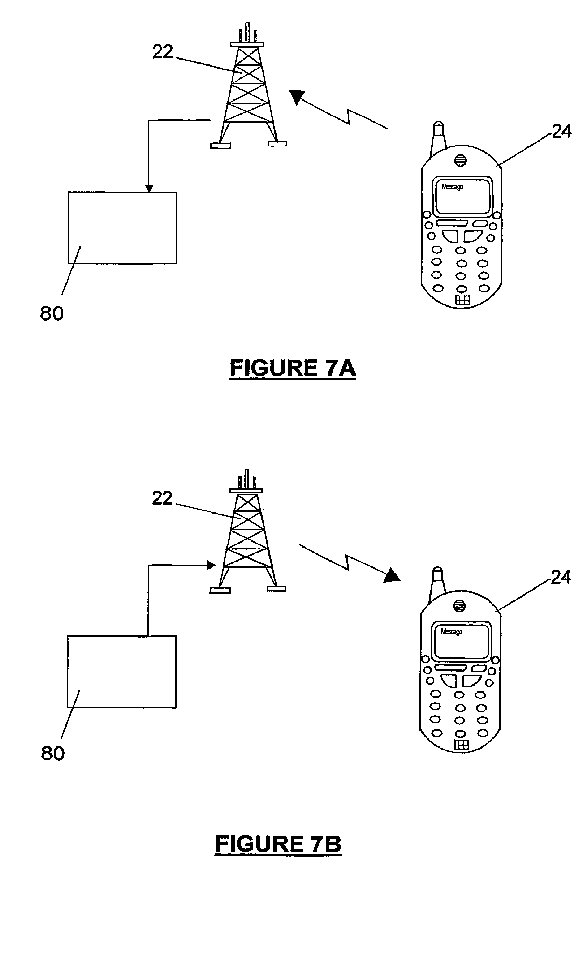

Attention is drawn to Figures 7A and 7B, illustrating the action of the ninth operation 78 of figure 6. Lacking the required routine, in Figure 7A, the receiving handset 24 automatically puts in a call through the receiving base station 22 to a central data base 80 connected to the switched telephone network. The database 80 seeks out the required routine, and, in Figure 7B, sends the required routine, back through the switched telephone network and the receiving base station 22, to the receiving handset 24. The receiving handset 24 then stores the required routine in the EAROM 46. If the EAROM 46 is on the SIM card, the routine is made portable from handset 24 to handset 24 when the user changes service supplier or handset model.

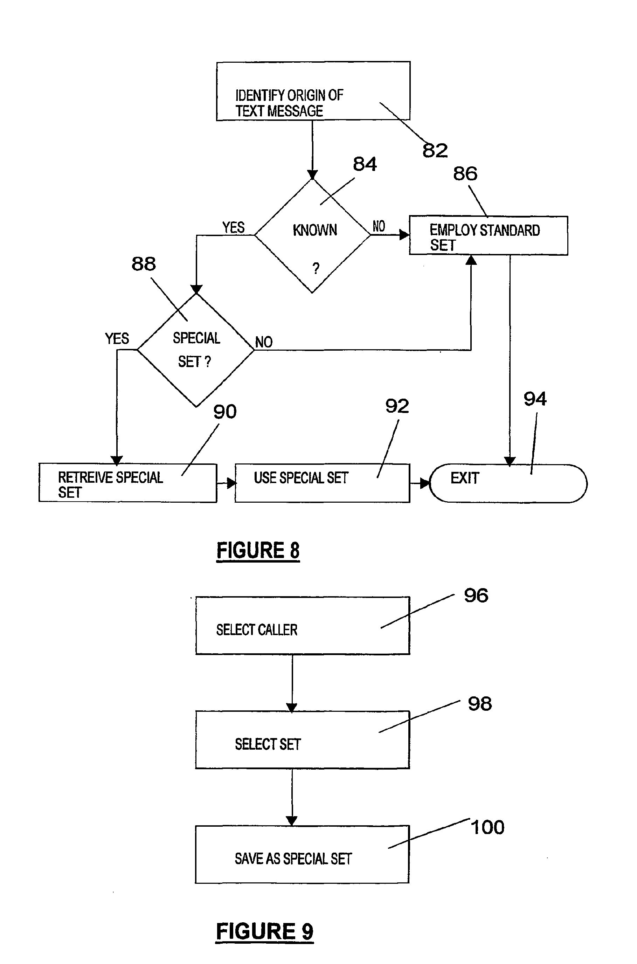

While it is preferred that the transfer of the request for the required routine from the receiving handset 24, and the transfer of the required routine to the receiving handset 24 are all in the space of a single automatic call, originating from the receiving handset 24, the invention also provides that the data base 80, if a delay is unavoidable, can respond to the receiving handset 24 by placing a second (non-ringing) automatic call to the receiving handset 24. Attention is drawn to Figure 8, a flowchart illustrating how a user can select what style of additional images are automatically displayed when a text message is received.

When a text message is received, a tenth operation 82 examines the CLI (Caller Location Identifier), a coded message which accompanies each call (text or voice)and which serves to indicate, to the user, the origin of the call. This feature is well known in the art. In general, the CLI is used to consult the user's stored "phone book" and to display the name of the caller. As a default, no display or number display alone can be provided. The present invention puts the CLI to a further use. The tenth operation 82 checks the CLI. If a third test 84 detects that the sender of the text message is not in the receiving handset's 24 phone book, an eleventh operation selects the standard (default) set of routines to be displayed. If the third test 84 detects that the sender of the text message is in the phone book of the receiving handset 24, a fourth test 88 checks to see if the user of the receiving handset 24 has selected a special set of routines to be used when that particular text message sender sends a text message. If the user has not selected a special set for that text message sender, the eleventh operation 86 employs the standard (default) set of routines. If the user of the receiving handset 24 has selected a special set of routines for that particular text message sender, a twelfth operation 90 retrieves the special set of routines (which may involve the operations of Figures 7A and 7B) and a thirteenth operation 92 employs the selected special set when generating additional images for use when reading the text message. Exit 94 can be to the first operation 54 of figure 4.

Figure 9 is a flow chart illustrating how the user of the receiving handset 24 can apply a special set of routines for a particular caller (text messager). In a fourteenth operation 96, having opened the phone book in the receiving handset 24, the user selects a particular caller from the list. In a fifteenth operation 98 the user selects a "Display Set" menu and selects an appropriate set of routines. A sixteenth operation 100 then stores the identity of selected set for selection and use as illustrated with reference to Figure 8.

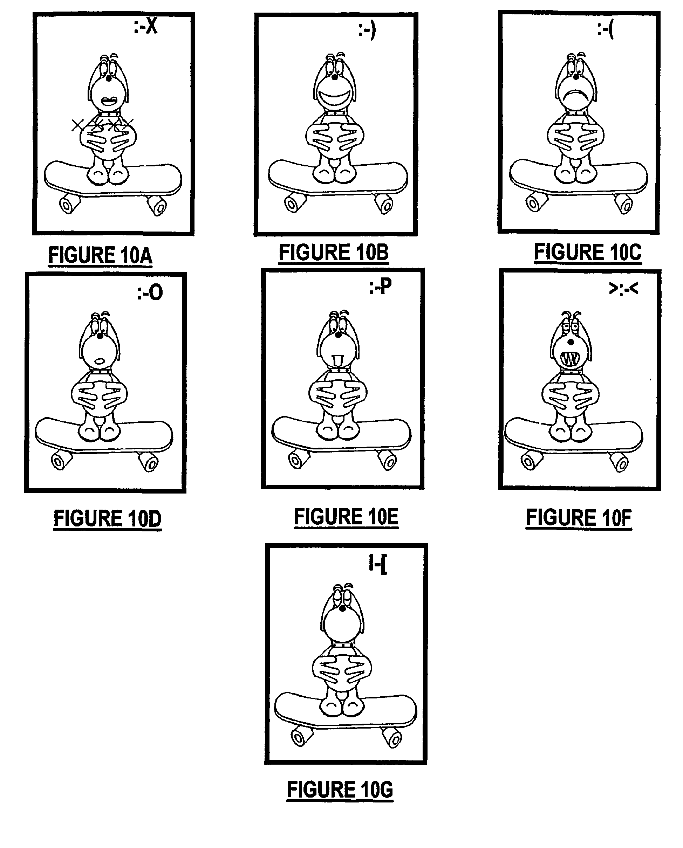

Figures 10A to 10B show examples of one set (usable as the default set) of images which can be called up by the present invention. Within each image is an example of a character string which can call up that image. The character is a dog, holding a ball. In Figure 10A the dog is blowing kisses. In Figure 10B the dog is happy. In Figure 10C the dog is sad. In Figure 10D the dog is surprised. In Figure 10E the dog is sticking out its tongue. In Figure 10F the dog is angry. In Figure 10G the dog is asleep. Other sets can have different creatures, different poses, and different call-up codes.

The examples, given in Figure 10, are of static images. The routines, called up, according to the invention, can equally be short animations, generated by a series of billboards, or created by movement of a three dimensional model projected for the two dimensional screen 14. The images or animations can be interspersed between letters in the text message, or can be used to fill the whole or part of the screen 14 as a character string "enters stage right" or "exits stage left*"*

The user, of the receiving handset 24, in the twelfth operation 90 (of Figure 8) can specify particular or new character strings to bring up images selected by the user, and can do so with images received from the database 80. For example, if the word "Love" appears, the user can specify that an image or animation of a throbbing heart appears. If the name of someone hated appears, an image of a dagger or an animation of a stabbing, or some such instrument or action can be specified to appear. The present invention also encompasses a selected image or animation being selected for each caller, the selected image or animation being retrieved instead of the caller's identity or number, so that the caller may be visually identified by the recipient, even for ordinary voice calls.

The present invention also encompasses that a user can insert images or animations, not from a stock library or database, but loaded into the handset from a digital camera, or by connection to a computer, or by insertion of a specially preprogrammed or pre-loaded card.

## Claims

1. A method for enhancing the display of a data message (12) on a screen (14) of a receiving mobile communications device (24), the data message (12) including a string of characters, the method including:
receiving the data message (12) from a sending mobile communications device (10) capable of generating and sending the data message (12) via a mobile telecommunications network (18, 20, 22);
identifying one or more consecutive characters in the string of characters as a pointer to an associated enhanced display data item (26) stored in a database (80) comprising a plurality of enhanced display data items (26);
retrieving the associated enhanced display data item (26) from the database (80) using the pointer; and
displaying the associated enhanced display data item (26) in response to executing the identifying and retrieving steps, wherein the retrieving and displaying steps retrieve and display an associated display data item (26) which comprises a three-dimensional construct.

2. A method, according to claim 1, wherein the displaying step comprises displaying the associated enhanced display data item (26) in place of the one or more consecutive characters identified during the identifying step.

3. A method, according to claim 1, wherein the displaying step comprises displaying the associated enhanced display data item (26) together with the one or more consecutive characters identified during the identifying step.

4. A method, according to any preceding claim, wherein said string of characters comprises a single character.

5. A method, according to any preceding claim, wherein the associated enhanced display data item (26) includes a picture.

6. A method, according to any preceding claim, wherein the associated enhanced display data item (26) includes an animation.

7. A method, according to any one of claims 1 to 5, further comprising causing the three-dimensional construct to be moved to create an animated display.

8. A method, according to any preceding claim, wherein the database (80) comprises a plurality of enhanced display data item sets, and the method further comprises selecting which enhanced display data item set is displayed.

9. A method, according to any preceding claim, further comprising obtaining enhanced display data items (26) for the database (80) from a remote source.

10. A method, according to claim 9, wherein said remote source includes a server.

11. A method, according to claim 9 or claim 10, wherein said remote source includes a camera.

12. A method, according to any one of claims 9 to 11, wherein access to the remote source is achieved via the mobile telecommunications network (18, 20, 22) configured to access the World Wide Web.

13. A method, according to any preceding claim, wherein said method is implemented on a mobile telephone.

14. A method, according to any preceding claim, further comprising storing an identifier for the sending mobile communications device (10) in a database (80) and attributing an associated enhanced display data item set with the stored identifier.

15. A method, according to claim 14, wherein the receiving step further comprises:
recognising the identifier of the sending mobile communications device (10);
retrieving the associated enhanced display data item set ; and
utilising the associated enhanced display data item set in the displaying step

16. A method, according to any preceding claim, wherein said database (80) is stored within the receiving device.

17. An apparatus for enhancing the display of a data message (12) on a screen (14) of a receiving mobile communications device (24), the data message (12) including a string of characters, the apparatus comprising:
receiving means for receiving the data message (12) from a sending mobile communications device capable of generating and sending the data message (12) via a mobile telecommunications network (18, 20, 22);
identifying means for identifying one or more consecutive characters in the string of characters as a pointer to an associated enhanced display data item (26) stored in a database (80) comprising a plurality of enhanced display data items (26);
retrieving means for retrieving the associated enhanced display data item (26) from the database (80) using the pointer; and
displaying means for displaying on the screen (14) the associated enhanced display data item (26) retrieved by the retrieving means, wherein the retrieving means retrieves an associated display data item (26) which comprises a three-dimensional construct.

18. An apparatus, according to claim 17, wherein the displaying means is arranged to display the enhanced display data item (26) in place of the one or more consecutive characters identified by the identifying means.

19. An apparatus, according to claim 17, wherein the displaying means is arranged to display the enhanced display data item (26) together with the one or more consecutive characters identified by the identifying means.

20. An apparatus, according to any one of claims 17 to 19, wherein the string of characters comprises a single character.

21. An apparatus, according to any one of claims 17 to 20, wherein the associated enhanced display data item (26) includes a picture.

22. An apparatus, according to any one of claims 17 to 21, wherein the associated enhanced display data item (26) includes an animation.

23. An apparatus, according to any one of claims 17 to 21, further comprising means for moving said three-dimensional construct to create an animated display.

24. An apparatus, according to any one of claims 17 to 23, wherein the database (80) comprises a plurality of enhanced display data item sets and means for selecting which enhanced display data item set is displayed.

25. An apparatus, according to any one of claims 17 to 23, wherein said database is arranged to obtain enhanced display data items (26) from a remote source.

26. An apparatus, according to claim 25, wherein said remote source includes a server.

27. An apparatus, according to claim 25 or claim 26, wherein said remote source includes a camera.

28. An apparatus, according to any one of claims 25 to 27, wherein access to the remote source is achieved via the mobile telecommunications network (18, 20, 22) configured to access the World Wide Web.

29. An apparatus, according to any one of claims 17 to 28, wherein the mobile communications device is a mobile telephone.

30. An apparatus, according to claim 29 wherein said script is representative of a caller identity.

31. An apparatus, according to any one of claims 17 to 30, wherein said database (80) is stored within the receiving device.

32. A method for enhancing the display of a data message (12) on a screen (14) of a sending mobile communications device (10) capable of generating and sending the data message (12) via a mobile telecommunications network (18, 20, 22) to a receiving mobile communications device (24), the data message (12) including a string of characters, the method including:
generating the data message (12) using the sending mobile communications device;
identifying one or more consecutive characters in the string of characters as a pointer to an associated enhanced display data item (26) stored in a database (80) comprising a plurality of enhanced display data items (26);
retrieving the associated enhanced display data item (26) from the database (80) using the pointer; and
displaying the associated enhanced display data item (26) in response to executing the identifying and retrieving steps, wherein the retrieving and displaying steps retrieve and display an associated display data item (26) which comprises a three-dimensional construct.

## Patentansprüche

1. Verfahren zum Verbessern der Anzeige einer Datennachricht (12) auf einem Schirm (14) einer empfangenden Funkkommunikationseinrichtung (24), wobei die Datennachricht (12) eine Kette von Zeichen enthält, wobei das Verfahren folgendes beinhaltet:
Empfangen der Datennachricht (12) von einer sendenden Funlckommunikationseinrichtung (10), die in der Lage ist, die Datennachricht (12) zu erzeugen und über ein Funktelekommunikationsnetz (18, 20, 22) zu senden;
Identifizieren eines oder mehrerer aufeinanderfolgender Zeichen in der Kette aus Zeichen als ein Zeiger zu einem assoziierten verbesserten Anzeigedatenelement (26), das in einer Datenbank (80) gespeichert ist, die mehrere verbesserte Datenanzeigeelemente (26) umfaßt;
Abrufen des assoziierten verbesserten Anzeigedatenelements (26) aus der Datenbank (80) unter Verwendung des Zeigers und
Anzeigen des assoziierten verbesserten Anzeigedatenelements (26) als Reaktion auf das Ausführen der Schritte des Identifizierens und Abrufens, wobei die Schritte des Identifizierens und Abrufens ein assoziiertes Anzeigedatenelement (26), das ein dreidimensionales Konstrukt umfaßt, abrufen und anzeigen.

2. Verfahren nach Anspruch 1, wobei der Anzeigeschritt das Anzeigen des assoziierten verbesserten Anzeigedatenelements (26) anstelle des/der während des Identifizierungsschritts identifizierten einen oder mehreren aufeinanderfolgenden Zeichen umfaßt.

3. Verfahren nach Anspruch 1, wobei der Anzeigeschritt das Anzeigen des assoziierten verbesserten Anzeigedatenelements (26) zusammen mit dem/den während des Identifizierungsschritts identifizierten einen oder mehreren aufeinanderfolgenden Zeichen umfaßt.

4. Verfahren nach einem der vorhergehenden Ansprüche, wobei die Kette von Zeichen ein einzelnes Zeichen umfaßt.

5. Verfahren nach einem der vorhergehenden Ansprüche, wobei das assoziierte verbesserte Anzeigedatenelement (26) ein Bild umfaßt.

6. Verfahren nach einem der vorhergehenden Ansprüche, wobei das assoziierte verbesserte Anzeigedatenelement (26) eine Animation umfaßt.

7. Verfahren nach einem der Ansprüche 1 bis 5, weiterhin umfassend zu verursachen, daß das dreidimensionale Konstrukt bewegt wird, um eine animierte Anzeige zu erzeugen.

8. Verfahren nach einem der vorhergehenden Ansprüche, wobei die Datenbank (80) mehrere verbesserte-Anzeigedatenelement-Sätze umfaßt und das Verfahren wei-terhin das Auswählen umfaßt, welcher verbesserte-Anzeigedatenelement-Satz angezeigt wird.

9. Verfahren nach einem der vorhergehenden Ansprüche, weiterhin umfassend das Erhalten verbesserter Anzeigedatenelemente (26) für die Datenbank (80) von einer entfernten Quelle.

10. Verfahren nach Anspruch 9, wobei die entfernte Quelle einen Server enthält.

11. Verfahren nach Anspruch 9 oder 10, wobei die entfernte Quelle eine Kamera enthält.

12. Verfahren nach einem der Ansprüche 9 bis 11, wobei Zugang zu der entfernten Quelle über das Funktelekommunikationsnetz (18, 20, 22) erzielt wird, das konfiguriert ist, auf das weltweite Netz zuzugreifen.

13. Verfahren nach einem der vorhergehenden Ansprüche, wobei das Verfahren auf einem Funktelefon implementiert ist.

14. Verfahren nach einem der vorhergehenden Ansprüche, weiterhin umfassend das Speichern einer Kennzeichnung für die sendende Funkkommunikationseinrichtung (10) in einer Datenbank (80) und Zuordnen eines assoziierten verbesserte-Anzeigedatenelement-Satzes zu dem gespeicherten Kennzeichen.

15. Verfahren nach Anspruch 14, wobei der Empfangsschritt weiterhin folgendes umfaßt:
Erkennen der Kennzeichnung der sendenden Funkkommunikationseinrichtung (10);
Abrufen des assoziierten verbesserte-Anzeigedatenelement-Satzes und
Verwenden des assoziierten verbesserte-Anzeigedatenelement-Satzes in dem Anzeigeschritt.

16. Verfahren nach einem der vorhergehenden Ansprüche, wobei die Datenbank (80) innerhalb der empfangenden Einrichtung gespeichert ist.

17. Vorrichtung zum Verbessern der Anzeige einer Datennachricht (12) auf einem Schirm (14) einer empfangenden Funkkommunikationseinrichtung (24), wobei die Datennachricht (12) eine Kette von Zeichen enthält, wobei die Vorrichtung folgendes umfaßt:
Empfangsmittel zum Empfangen der Datennachricht (12) von einer sendenden Funkkommunikationseinrichtung, die in der Lage ist, die Datennachricht (12) zu erzeugen und über ein Funktelekommunikationsnetz (18, 20, 22) zu senden;
Identifizierungsmittel zum Identifizieren eines oder mehrerer aufeinanderfolgender Zeichen in der Kette aus Zeichen als ein Zeiger zu einem assoziierten verbesserten Anzeigedatenelement (26), das in einer Datenbank (80) gespeichert ist, die mehrere verbesserte Datenanzeigeelemente (26) umfaßt;
Abrufmittel zum Abrufen des assoziierten verbesserten Anzeigedatenelements (26) aus der Datenbank (80) unter Verwendung des Zeigers und
Anzeigemittel zum Anzeigen des von dem Abrufmittel abgerufenen assoziierten verbesserten Anzeigedatenelements (26) auf dem Schirm (14), wobei das Abrufmittel ein assoziiertes Anzeigedatenelement (26) abruft, das ein dreidimensionales Konstrukt umfaßt.

18. Vorrichtung nach Anspruch 17, wobei das Anzeigemittel ausgelegt ist, das assoziierte verbesserte Anzeigedatenelement (26) anstelle der von dem Identifizierungsmittel identifizierten einen oder mehreren aufeinanderfolgenden Zeichen anzuzeigen.

19. Vorrichtung nach Anspruch 17, wobei das Anzeigemittel ausgelegt ist, das verbesserte Anzeigedatenelement (26) zusammen mit dem/den von dem Identifizierungsmittel identifizierten einen oder mehreren aufeinanderfolgenden Zeichen anzuzeigen.

20. Vorrichtung nach einem der Ansprüche 17 bis 19, wobei die Kette von Zeichen ein einzelnes Zeichen umfaßt.

21. Vorrichtung nach einem der Ansprüche 17 bis 20, wobei das assoziierte verbesserte Anzeigedatenelement (26) ein Bild umfaßt.

22. Vorrichtung nach einem der Ansprüche 17 bis 21, wobei das assoziierte verbesserte Anzeigedatenelement (26) eine Animation enthält.

23. Vorrichtung nach einem der Ansprüche 17 bis 21, weiterhin umfassend Mittel zum Bewegen des dreidimensionalen Konstrukts, um eine animierte Anzeige zu erzeugen.

24. Vorrichtung nach einem der Ansprüche 17 bis 23, wobei die Datenbank (80) mehrere verbesserte-Anzeigedatenelement-Sätze und Mittel umfaßt zum Auswählen, welcher verbesserte-Anzeigedatenelement-Satz angezeigt wird.

25. Vorrichtung nach einem der Ansprüche 17 bis 23, wobei die Datenbank ausgelegt ist, verbesserte Anzeigedatenelemente (26) von einer entfernten Quelle zu erhalten.

26. Vorrichtung nach Anspruch 25, wobei die entfernte Quelle einen Server enthält.

27. Vorrichtung nach Anspruch 25 oder 26, wobei die entfernte Quelle eine Kamera enthält.

28. Vorrichtung nach einem der Ansprüche 25 bis 27, wobei Zugang zu der entfernten Quelle über das Funktelekommunikationsnetz (18, 20, 22) erzielt wird, das konfiguriert ist, auf das weltweite Netz zuzugreifen.

29. Vorrichtung nach einem der Ansprüche 17 bis 28, wobei die Funkkommunikationseinrichtung ein Funktelefon ist.

30. Vorrichtung nach Anspruch 29, wobei das Skript eine Anruferidentität darstellt.

31. Vorrichtung nach einem der Ansprüche 17 bis 30, wobei die Datenbank (80) innerhalb der empfangenden Einrichtung gespeichert ist.

32. Verfahren zum Verbessern der Anzeige einer Datennachricht (12) auf einem Schirm (14) einer sendenden Funkkommunikationseinrichtung (10), die in der Lage ist, die Datennachricht (12) zu erzeugen und über eine Funktelekommunikationseinrichtung (18, 20, 22) an eine empfangende Funkkommunikationseinrichtung (24) zu senden, wobei die Datennachricht (12) eine Kette von Zeichen enthält, wobei das Verfahren folgendes beinhaltet:
Erzeugen der Datennachricht (12) unter Verwendung der sendenden Funkkommunikationseinrichtung;
Identifizieren eines oder mehrerer aufeinanderfolgender Zeichen in der Kette aus Zeichen als ein Zeiger zu einem assoziierten verbesserten Anzeigedatenelement (26), das in einer Datenbank (80) gespeichert ist, die mehrere verbesserte Datenanzeigeelemente (26) umfaßt;
Abrufen des assoziierten verbesserten Anzeigedatenelements (26) aus der Datenbank (80) unter Verwendung des Zeigers und
Anzeigen des assoziierten verbesserten Anzeigedatenelements (26) als Reaktion auf das Ausführen der Schritte des Identifizierens und Abrufens, wobei die Schritte des Identifizierens und Abrufens ein assoziiertes Anzeigedatenelement (26), das ein dreidimensionales Konstrukt umfaßt, abrufen und anzeigen.

## Revendications

1. Méthode d'amélioration de l'affichage d'un message de données (12) sur un écran (14) d'un dispositif récepteur de communication mobile (24), le message de données comprenant une chaîne de caractères, la méthode incluant :
la réception du message de données (12) à partir d'un dispositif émetteur de communication mobile (10) susceptible de générer et d'envoyer le message de données (12) par l'intermédiaire d'un réseau de télécommunication mobile (18, 20, 22) ;
l'identification d'un, ou plus, caractère consécutif dans la chaîne de caractères en tant que pointeur vers un élément de données d'affichage amélioré associé (26) enregistré dans une base de données (80) constituée d'une pluralité d'éléments de données d'affichage améliorés (26) ;
la récupération de l'élément de données d'affichage amélioré associé (26) à partir de la base de données (80) à l'aide du pointeur ; et
l'affichage de l'élément de données d'affichage amélioré associé (26) en réponse à l'exécution des étapes d'identification et de récupération, dans laquelle les étapes de récupération et d'affichage permettent de récupérer et d'afficher un élément de données d'affichage amélioré associé (26) constitué d'une construction en trois dimensions.

2. Méthode, selon la revendication 1, dans laquelle l'étape d'affichage consiste à afficher l'élément de données d'affichage amélioré associé (26) à la place du, ou plus, caractère consécutif identifié lors de l'étape d'identification.

3. Méthode, selon la revendication 1, dans laquelle l'étape d'affichage consiste à afficher l'élément de données d'affichage amélioré associé (26) avec le, ou plus, caractère consécutif identifié lors de l'étape d'identification.

4. Méthode, selon l'une quelconque des revendications précédentes, dans laquelle ladite chaîne de caractères est constituée d'un seul caractère.

5. Méthode, selon l'une quelconque des revendications précédentes, dans laquelle l'élément de données d'affichage amélioré associé (26) inclut une image.

6. Méthode, selon l'une quelconque des revendications précédentes, dans laquelle l'élément de données d'affichage amélioré associé (26) inclut une animation.

7. Méthode, selon l'une quelconque des revendications 1 à 5, comprenant en outre le résultat du déplacement de la construction en trois dimensions pour créer un affichage animé.

8. Méthode, selon l'une quelconque des revendications précédentes, dans laquelle la base de données (80) est constituée d'une pluralité de jeux d'éléments de données d'affichage améliorés, et qui comprend en outre la sélection dujeu d'éléments de données d'affichage améliorés affiché.

9. Méthode, selon l'une quelconque des revendications précédentes, comprenant en outre l'obtention d'éléments de données d'affichage améliorés (26) pour la base de données (80) à partir d'une source distante.

10. Méthode, selon la revendication 9, dans laquelle ladite source distante inclut un serveur.

11. Méthode, selon la revendication 9 ou la revendication 10, dans laquelle ladite source distante inclut une caméra.

12. Méthode, selon l'une quelconque des revendications 9 à 11, dans laquelle l'accès à la source distante est obtenu par l'intermédiaire du réseau de télécommunication mobile (18, 20, 22) configuré pour accéder au World Wide Web.

13. Méthode, selon l'une quelconque des revendications précédentes, dans laquelle ladite méthode est mise en oeuvre sur un téléphone mobile.

14. Méthode, selon l'une quelconque des revendications précédentes, comprenant en outre l'enregistrement d'un identifiant pour le dispositif de communication mobile (10) dans une base de données (80) et l'attribution d'un jeu d'éléments de données d'affichage améliorés associé à l'identifiant enregistré.

15. Méthode, selon la revendication 14, dans laquelle l'étape de réception comprend en outre :
la reconnaissance de l'identifiant du dispositif émetteur de communication mobile (10) ;
la récupération du jeu d'éléments de données d'affichage améliorés ; et
l'utilisation du jeu d'éléments de données d'affichage améliorés associé à l'étape d'affichage.

16. Méthode, selon l'une quelconque des revendications précédentes, dans laquelle ladite base de données (80) est enregistrée à l'intérieur du dispositif de réception.

17. Appareil pour l'amélioration de l'affichage d'un message de données (12) sur un écran (14) d'un dispositif récepteur de communication mobile (24), le message de données (12) incluant une chaîne de caractères, l'appareil comprenant :
des moyens de réception, pour la réception du message de données (12) provenant d'un dispositif de communication mobile susceptible de générer et d'envoyer le message de données (12) par l'intermédiaire d'un réseau de télécommunication mobile (18, 20, 22) ;
des moyens d'identification, pour l'identification d'un, ou plus, caractère consécutif dans la chaîne de caractères en tant que pointeur vers un élément de données d'affichage amélioré associé (26) enregistré dans la base de données (80) comprenant une pluralité d'éléments de données d'affichage améliorés associés (26) ;
des moyens de récupération, pour la récupération d'un élément de données d'affichage amélioré associé (26) à partir de la base de données (80) à l'aide du pointeur ; et
des moyens d'affichage, pour l'affichage sur l'écran (14) de l'élément de données d'affichage amélioré associé (26) récupéré par les moyens de récupérations, dans lesquels les moyens de récupération permettent de récupérer un élément de données d'affichage associé (26) qui comprend une construction en trois dimensions.

18. Appareil, selon la revendication 17, dans lequel les moyens d'affichage sont disposés pour afficher l'élément de données d'affichage amélioré (26) à la place du, ou plus, caractère consécutif identifié par les moyens d'identification.

19. Appareil, selon la revendication 17, dans lequel les moyens d'affichage sont disposés pour afficher l'élément de données d'affichage amélioré (26) associé avec le, ou plus, caractère consécutif identifié par les moyens d'identification.

20. Appareil, selon l'une quelconque des revendications 17 à 19, dans lequel la chaîne de caractère est constituée d'un seul caractère.

21. Appareil, selon l'une quelconque des revendications 17 à 20, dans lequel l'élément de données d'affichage amélioré associé (26) inclut une image.

22. Appareil, selon l'une quelconque des revendications 17 à 21, dans lequel l'élément de données d'affichage amélioré associé (26) inclut une animation.

23. Appareil, selon l'une quelconque des revendications 17 à 21, comprenant en outre des moyens de déplacement de ladite construction en trois dimensions pour créer un affichage animé.

24. Appareil, selon l'une quelconque des revendications 17 à 23, dans lequel la base de données (80) comprend une pluralité dejeux d'éléments de données d'affichage améliorés et de moyens de sélection du jeu d'éléments de données d'affichage améliorés affiché.

25. Appareil, selon l'une quelconque des revendications 17 à 23, dans lequel ladite base de données est disposée pour obtenir des jeux d'éléments d'affichage améliorés (26) à partir d'une source distante.

26. Appareil, selon la revendication 25, dans lequel ladite source distante inclut un serveur.

27. Appareil, selon la revendication 25 ou la revendication 26, dans lequel ladite source distante inclut une caméra.

28. Appareil, selon l'une quelconque des revendications 25 à 27, dans lequel l'accès à la source distante est obtenu par l'intermédiaire du réseau de télécommunication mobile (18, 20, 22) configuré pour accéder au World Wide Web.

29. Appareil, selon l'une quelconque des revendications 17 à 28, dans lequel le dispositif de communication mobile est un téléphone mobile.

30. Appareil, selon la revendication 29, dans lequel ledit script est représentatif d'une identité d'appelant.

31. Appareil, selon l'une quelconque des revendications 17 à 30, dans lequel ladite base de données (80) est enregistrée à l'intérieur du dispositif récepteur.

32. Méthode pour l'amélioration de l'affichage d'un message de données (12) sur un écran (14) d'un dispositif émetteur de communication mobile (10) susceptible de générer et d'envoyer le message de données (12) par l'intermédiaire d'un réseau de télécommunication (18, 20, 22) vers un dispositif récepteur de communication mobile (24), le message de données (12) incluant une chaîne de caractères, la méthode comprenant :
la génération du message de données (12) à l'aide du dispositif émetteur de communication mobile ;
l'identification d'un, ou plus, caractère consécutif dans la chaîne de caractères en tant que pointeur vers un élément de données d'affichage amélioré associé (26) enregistré dans la base de données (80) comprenant une pluralité d'éléments de données d'affichage amélioré associés (26) ;
la récupération d'un élément de données d'affichage amélioré associé (26) à partir de la base de données (80) à l'aide du pointeur ; et
l'affichage de l'élément de données d'affichage amélioré associé (26) en réponse à l'exécution des étapes de récupération et d'identification, dans laquelle les étapes de récupération et d'affichage permettent de récupérer et d'afficher un élément de données d'affichage associé (26) qui comprend une construction en trois dimensions.
